**Europäisches Patentamt**

(19) **European Patent Office**

**Office européen des brevets**

(11) Publication number : **0 459 551 B1**

# (12) EUROPEAN PATENT SPECIFICATION

(45) Date of publication of patent specification :
08.09.93 Bulletin 93/36

(51) Int. Cl.$^5$ : **A21D 6/00**

(21) Application number : **91201025.3**

(22) Date of filing : **29.04.91**

---

(54) **Improved flour.**

---

(30) Priority : **21.05.90 EP 90201277**

(43) Date of publication of application :
**04.12.91 Bulletin 91/49**

(45) Publication of the grant of the patent :
**08.09.93 Bulletin 93/36**

(84) Designated Contracting States :
**AT BE CH DE DK ES FR GB GR IT LI NL SE**

(56) References cited :
**EP-A- 279 496**
**FR-A- 380 321**
**US-A- 3 489 569**

(73) Proprietor : **UNILEVER N.V.**
**Weena 455**
**NL-3013 AL Rotterdam (NL)**
(84) **BE CH DE DK ES FR GR IT LI NL SE AT**
Proprietor : **UNILEVER PLC**
**Unilever House Blackfriars P.O. Box 68**
**London EC4P 4BQ (GB)**
(84) **GB**

(72) Inventor : **Graveland, Arie**
**Unilever Research Lab., Olivier van Noortlaan**
**120**
**Vlaardingen (NL)**
Inventor : **Henderson, Matthijs Huibert**
**Unilever Research Lab., Olivier van Noortlaan**
**120**
**Vlaardingen (NL)**

(74) Representative : **Elliott, Peter William et al**
**Unilever N.V. Patent Division P.O. Box 137**
**NL-3130 AC Vlaardingen (NL)**

Jouve, 18, rue Saint-Denis, 75001 PARIS

EP 0 459 551 B1

## Description

In the field of bakery products there is an increasing demand for all-natural bread improvers. One way to achieve this is by upgrading the flour, in particular wheat flour, by physical modifications.

Therefore, a few mills have tried to upgrade their current wheat flours by remilling on a conventional roller mill. Although the flours obtained showed some improvement in baking performance, a big disadvantage of these flours is the increase of the amount of damaged starch, which adversely affects the functional properties of the flours. In EP 279 496 a flour is disclosed that is a mixture of a micronised flour (particle size about 20 μm) and a non-micronised flour in ratios of 20-50 : 50-80. The micronised flour is obtained by a mechanical treatment. Although the damaged starch content is not disclosed, this will be quite high because of the mechanical treatment. An example of such a micronised flour containing material having a mean particle size of about 32 μm is the product "Micro flour" from a Belgian mill (De Watermolen). However, baking tests carried out by us revealed only a small positive effect of this Micro flour in making puff pastry products.

Therefore, we have been looking for methods of making an improved flour having a small particle size and having more functional gluten for baking purposes.

We have found that such an improved flour can be obtained by remilling flour in a air-jet mill. In the first place, our invention is therefore concerned with an improved flour having a small particle size for baking purposes, in which the flour has a mean particle size of less than 45 μm, an amount of damaged starch, measured according to A.A.CC 76-30 A, of less than 8 wt.%, preferably 4-7 wt.%, and a water content of 2-12 wt.%, this flour being obtainable by remilling a flour with a water content of more than 12.5 wt.%, which is optionally pre-dried, in an air-jet mill. This improved flour preferably has a water content of 3.0-8.0 wt.%.

The mean diameter of the flour particles, after the flour has been remilled twice, is preferably less than 25 μm. The mean diameter of the flour particles is measured by Sympatec Helos Particle Size Analyser®. For this purpose, 1 g of the flour is suspended in 20 ml of water and magnetically stirred for 2 hours and finally sonicated for 120 seconds. This flour exhibits excellent properties as regards the puff pastry performance.

As a result of the remilling of the flour with the air-jet mill, the flour particles are disaggregated into separate starch kernels and protein particles.

The mean diameter of the particles, after the flour has been remilled once, is less than 45 μm, while this value becomes less than 25 μm after remilling twice, using a Helos 15 particle size analyser. The water content of the flour, which was above 12.5 wt.% in the starting flour, decreases to a value between 9 and 12 wt.% as a result of the remilling.

Although drying of the flour prior to remilling does not influence the particle size of the remilled flour, the baking performance of the flour is greatly enhanced when the flour is pre-dried.

Although we do not wish to be bound by any theory, we believe that, as a result of the pre-drying and remilling, the reduction capacity (breakdown) of the glutenins present in the flour is reduced. This reduction capacity can be illustrated by the oxygen uptake of the flour. Therefore, we have determined the oxygen uptake of our flour. This measurement was carried out amperometrically, using a Biometer® ex Braun. The oxygen uptake is measured by a Clarck® electrode, i.e. a Pt cathode and Ag anode, immersed in the same KCl solution but separated from the test solution by a polytetrafluoroethylene membrane. A potential of 0.5-0.8 V is applied across these electrodes and the current generated is proportional to the $O_2$ concentration in the suspension. For the measurement 200 mg flour samples were suspended in 5 ml 0.05 M phosphate buffer (pH = 6.5) in the $O_2$ electrode cell at 25°C. The $O_2$ uptake was measured for a period of 10 minutes. The results of these measurements show that the preferred flours according to the invention have an $O_2$ uptake of 0.01-3.0 μg $O_2$/g flour/10 min, more preferably of 0.5-2.5 μg $O_2$/g flour/10 min.

Normal flour (not remilled) shows an uptake of more than 3.5 μg $O_2$/g flour/10 min.

The remilling of the flour was performed in a laboratory Chrispo® MC 100 air-jet mill or in a Wedco® 200 mill.

The Chrispo® MC 100 had a diameter of 100 mm, while an air flow at 20°C and an air pressure of 7 bar of 0.8 Nm³/min. was used. Milling was carried out, using two different feed rates corresponding with capacities of 1 kg/h and 1.2 kg/h, respectively.

The Wedco® 200 had a diameter of 200 mm and the air flow at 20°C and 7 bar air pressure was 3.0 Nm³/min. The capacity of this mill was 10 kg/h.

In both mills the flow particles are blown with the aid of an air stream into a chamber equipped with nozzles. The flour particles are split by contact deformation during mutual collisions.

The conditions of the air-jet mill are in general :

temperature : 10-95°C, preferably 20-80°C;
air flow : 0.4-8.0 Nm³/min., preferably 0.6-5.0 Nm³/min.
air pressure : 3-20 bar, preferably 5-15 bar.

2

Remilling is carried out at least once, although we prefer to repeat the remilling at least once more. The best flours were obtained when the remilling in the air-jet mill was preceded by pre-drying of the flour. For this purpose, the flour is preheated, preferably at a temperature of 35-80°C for 5 minutes - 50 hours, in particular at 50-70°C for 20 minutes - 2 hours. The water content of the pre-dried flour is 5-10 wt.%.

Pre-drying can be carried out in any known manner but the best results were obtained when pre-drying was performed by a fluidized bed process.

The desired temperature in the air-jet mill is preferably obtained by introducing the hot, pre-dried product into the mill. This is the most efficient way to carry out the process.

The invention also concerns bakery products that include at least partly the flour according to the invention. Doughs that contain at least partly the improved flour according to the invention are also part of the invention.

Finally, the invention is also concerned with the use of a flour in a dough to improve the baking performance of the dough in which the improved flour according to the invention is used to increase the patty height of products obtained after baking of the dough containing the improved flour.

The invention will be illustrated by the following Examples :

I Baking methods used

a) URL-French puff pastry method

```
Recipe : 250 g flour
         135 g water*
          50 g pre-dough margarine (Biskien® Zacht)
         200 g puff pastry margarine (Trio® Korst)


       * Depends on the type of flour used, in other words

       depends on the water absorption. Farinograph water

       absorption value minus 4% is mostly used.
```

Procedure

A pre-dough is made by kneading the flour, pre-dough margarine and water in a Diosna® mixer for 200 strokes. The pre-dough is rounded and allowed to rest for 10 minutes. The pastry margarine is slightly worked/plasticized and rolled out to a square sheet of 10 mm thickness. After the 10-minute resting time, the pre-dough is rolled out to a square sheet of abt. 8 mm thickness with about twice the size of the pastry margarine sheet. The pastry is placed on top of the pre-dough, which is then folded like an envelope. The composite dough is rolled out via dial positions on the rolling machine with the following steps : 30 - 25 - 22 - 20 -15 - 12 -10 mm to a rectangle of 10 mm thickness. The rectangular piece of dough is folded in three, turned 90° and rolled out as before. The whole procedure is called "whole turn" in three (two half turns). The dough is allowed to rest or relax for 45 minutes. To prevent drying out, the dough is covered with a polybag. Thereafter, the dough is given two half turns in three and the dough is again allowed to rest for 45 minutes. To complete the six half turn lamination procedure, the dough is again folded in three, turned 90° and folded in three for the last time. Let the dough relax for 45 minutes. The vol-au-vents are cut from the dough; the laminate thickness for the bottom of the patty is 4.0 mm (pricked with four pins); the laminate thickness for the top of the patty is 4.0 mm. After cutting, the laminates are allowed to rest for 60 minutes and then baked for about 20 minutes at 240°C.

b) MW no-time puff pastry method

```
Recipe : 250 g flour
          135 g water*
            7.5 g fat (Biskien® Zacht)
          200 g puff pastry margarine (Trio® Korst)
```

* Depends on the type of flour used. Farinograph water absorption value minus 4% is mostly used.

Procedure

A pre-dough is made by kneading the flour, pre-dough fat, and water in a Diosna® mixer for 150 strokes. The pre-dough is rounded and allowed to rest for 10 minutes. To prevent drying out, the dough is covered with a polybag. The pastry margarine is slightly worked/plasticized and rolled out to a rectangle of 15 x 28 cm of 6 mm thickness. The pre-dough is rolled out to a rectangle of 15 x 40 cm with a thickness of 7 mm. The pastry margarine sheet is placed on top of the pre-dough and folded in three (1 x 3). The composite dough is rolled out via the dial positions on the rolling machine with the following steps : 30 - 25 - 22 - 20 - 15 - 12 - 10 mm to a rectangle of 10 mm thickness. The rectangular piece of dough is folded in four, turned 90° and rolled out as mentioned above. The above procedure is repeated three times without any resting times. So, a dough is obtained having a total of 192 layers. After the last rolling out procedure, the dough is allowed to rest for 10 minutes and then the vol-au-vents are cut from the dough and baked. The bottom of the pastry is 4 mm (pricked); the laminate thickness for the top of the patty is 5 mm. After cutting, the laminates are baked directly for about 20 minutes at 240°C.

c) MW no-time puff pastry method + additives

```
Recipe :   250 g flour
         + 135 g water
             7.5 g fat (Biskien® Zacht)
             3.75 g sugar
             3.75 g lactose
             1.25 g milk powder
             1.25 g sodium caseinate
             2.0 g sodium chloride
           _____
           200 g puff pastry margarine (Trio® Korst).
```

Procedure

The same procedure was used as described in Example Ib for the MW no-time puff pastry method.

II. Survey of starting flours

The following flours displaying the same characteristics were used as starting flours :

TABLE I

## Main characteristics of wheat flours used

| Flour | Protein content on 14% moisture basis | Moisture | Ash content | wt.% damaged starch |
|---|---|---|---|---|
| Columbus ® | 12.5 | 14.1 | 0.45 | 6.1 |
| T405 ® | 11.5 | 14.5 | 0.38 | 6.5 |
| Mirabelle ® (dried) | 11.8 | 8.9 | 0.52 | − |
| Micro flour ® (ex De Watermolen) | 10.0 | 10.5 | 0.56 | 8.5-9.0 |

III. Remilling effect

T405® and Columbus® were remilled (1x and 2x) in the Crispo® MC 100 under the following conditions :

T : Room temperature
Air flow at 20°C : 8.0 Nm³/min.
Air pressure : 7 bar

The products displayed the following characteristics :

TABLE II

| Flour | Mean diameter $\mu$m | Water content | $O_2$ uptake | wt.% damaged starch |
|---|---|---|---|---|
| Columbus ® blank | 47.8 | 14.1 | 4.0 | 6.1 |
| remilled (1x) | 39.1 | 12.0 | 3.0 | 6.4 |
| remilled (2x) | 22.0 | 10.6 | 2.5 | 6.6 |
| T 405 ® blank | 52.4 | 14.0 | 4.5 | 7.2 |
| remilled (1x) | 40.0 | 12.1 | 3.5 | 7.3 |
| remilled (2x) | 21.0 | 10.5 | 2.0 | 7.5 |
| Mirabelle ® (Comm. dried flour) | 49.0 | 8.9 | 2.5 | 6.0 |
| remilled (1x) | 35.0 | 7.4 | 2.0 | 6.1 |
| remilled (2x) | 20.0 | 7.1 | 1.6 | 6.2 |

These products were tested according to the baking methods described in Ia - Ic, yielding the following results :

## TABLE III

### Remilling effect

(Baking test – URL-French method)

| Sample | Treatment | $H_2O$ content of flour | $H_2O$ addition dough (250 g flour) | Patty height mm |
|---|---|---|---|---|
| T 405® | Blank | 14.0% | 135 | 50 |
| T 405® | Remilled 1x | 12.1% | 140 | 57 |
| T 405® | Remilled 2x | 10.5% | 145 | 61 |
| Columbus® | Blank | 14.1% | 138 | 43 |
| Columbus® | Remilled 1x | 12.0% | 143 | 51 |
| Columbus® | Remilled 2x | 10.6% | 147 | 55 |
| Micro flour® (ex De Watermolen) | | 10.5% | 147 | 48 |

## TABLE IV

### Remilling effect

(Baking test – MW no-time puff pastry)

| Sample | Treatment | $H_2O$ content of flour | $H_2O$ addition dough | Patty height mm |
|---|---|---|---|---|
| T 405® | Blank | 14.0% | 135 | 41.3 |
| T 405® | Remilled 1x | 12.1% | 140 | 50.0 |
| T 405® | Remilled 2x | 10.5% | 145 | 52.0 |
| Columbus® | Blank | 14.1% | 138 | 44.0 |
| Columbus® | Remilled 1x | 12.0% | 143 | 50.0 |
| Columbus® | Remilled 2x | 10.6% | 147 | 48.0 |
| Micro flour® (ex De Watermolen) | | 10.5% | 147 | 43.0 |

## TABLE V

### Remilling effect

(Baking test – Mw no-time puff pastry + additives)

| Sample | Treatment | $H_2O$ content of flour | $H_2O$ addition dough | Patty height mm |
|---|---|---|---|---|
| T 405® | Blank | 14.0% | 123 | 43.5 |
| T 405® | Remilled 1x | 12.1% | 127 | 46.0 |
| T 405® | Remilled 2x | 10.5% | 132 | 47.5 |
| Columbus® | Blank | 14.1% | 126 | 40 |
| Columbus® | Remilled 1x | 12.0% | 130 | 43 |
| Columbus® | Remilled 2x | 10.6% | 134 | 47 |
| Micro flour® (ex De Watermolen) | | 10.4% | 147 | 43 |

### IV. Pre-drying and remilling effect

The flours of T 405®, Columbus® and Mirabelle® were pre-dried at 70°C for 20 minutes in a fluidized bed, using the Aeromatic Batch Fluidizer. Samples of the pre-dried flour were remilled at 70°C, using the technique of Example III. Characteristics of the dried and remilled Columbus® and T 405® are given in Table IX.

These flours were used in baking tests according to Examples Ia - Ic, yielding the following results :

7

## TABLE VI

<u>Drying and remilling effect</u>
(Baking test - URL-French method)

| Sample | Treatment | $H_2O$ addition dough | Patty height mm | $H_2O$ content of flour |
|---|---|---|---|---|
| T 405® | Blank | 135 | 45 | 14.0% |
| T 405® | Dried + remilled 1x | 171 | 53 | 3.2% |
| T 405® | Dried + remilled 2x | 171 | 59 | 4.4% |
| Columbus® | Blank | 135 | 49 | 14.5% |
| Columbus® | Dried + remilled 1x | 167 | 59 | 3.6% |
| Columbus® | Dried + remilled 2x | 167 | 66 | 4.2% |
| Mirabelle® | Dried | 160 | 59 | 8.9% |
| Mirabelle® | Dried + remilled 1x | 167 | 70 | 7.4% |
| Mirabelle® | Dried + remilled 2x | 170 | TO* | 7.1% |

* TO = turn over

## TABLE VII

### Drying and remilling effect
(Baking test - MW no-time puff pastry)

| Sample | Treatment | | $H_2O$ addition dough | Patty height mm | $H_2O$ content of flour |
|---|---|---|---|---|---|
| T 405 ® | Blank | | 135 | 46 | 14.0% |
| T 405 ® | Dried + remilled | 1x | 171 | 53 | 3.2% |
| T 405 ® | Dried + remilled | 2x | 171 | 54 | 4.4% |
| Columbus ® | Blank | | 135 | 43 | 14.5% |
| Columbus ® | Dried + remilled | 1x | 167 | 48 | 3.6% |
| Columbus ® | Dried + remilled | 2x | 167 | 52 | 4.2% |
| Mirabelle ® | Dried | | 160 | 44 | 8.9% |
| Mirabelle ® | Dried + remilled | 1x | 167 | 51 | 7.4% |
| Mirabelle ® | Dried + remilled | 2x | 170 | 53 | 7.1% |

## TABLE VIII

### Drying and remilling effect
(Baking test - Mw no-time puff pastry + additives)

| Sample | Treatment | | $H_2O$ addition dough | Patty height mm | $H_2O$ content of flour |
|---|---|---|---|---|---|
| T 405 ® | Blank | | 135 | 43 | 14.0% |
| T 405 ® | Dried + remilled | 1x | 171 | 50 | 3.2% |
| T 405 ® | Dried + remilled | 2x | 171 | 54 | 4.4% |

| | | | |
|---|---|---|---|
| Columbus® Blank | 135 | 43 | 14.5% |
| Columbus® Dried + remilled 1x | 167 | 50 | 3.6% |
| Columbus® Dried + remilled 2x | 167 | 53 | 4.2% |
| Mirabelle® Dried | 160 | 43 | 8.9% |
| Mirabelle® Dried + remilled 1x | 167 | 49 | 7.4% |
| Mirabelle® Dried + remilled 2x | 170 | 53 | 7.1% |

### TABLE IX

| Flour | Mean diameter μm | Water content | $O_2$ uptake | Wt.% damaged starch |
|---|---|---|---|---|
| Columbus® Dried | 47 | 3.5 | 2.8 | 6.5 |
| + Remilled (1x1) | 36 | 3.6 | 2.0 | 6.6 |
| + Remilled (2x1) | 20 | 4.2 | 1.6 | 6.6 |
| T 405® Dried | 52 | 3.2 | 2.1 | 7.6 |
| + Remilled (1x) | 36 | 3.2 | 1.8 | 7.8 |
| + Remilled (2x) | 21 | 4.4 | 1.6 | 7.8 |

## Claims

1. Improved flour having a small particle size for baking purposes, wherein the mean particle size is less than 45 μm, the amount of damaged starch is less than 8 wt.% and the water content of the flour is 2-12 wt.%, which flour is obtainable by remilling a flour having a water content of more than 12.5 wt.%, which is optionally pre-dried, in an air-jet mill.

2. Improved flour according to Claim 1, wherein the water content of the flour is 3.0 to 8.0 wt.% and the mean particle size is less than 25 μm.

3. Improved flour according to Claim 1, wherein the flour, when measured on an aqueous suspension of the flour, has an oxygen uptake of 0.01-3.0 μg $O_2$/g flour/10 min.

4. Improved flour according to Claim 3, wherein the flour has an oxygen uptake of 0.5-2.5 μg $O_2$/g flour/10 min.

5. Process for improving the baking performance of a flour, wherein the flour with a water content of more than 12.5 wt% is remilled in an air-jet mill, optionally after pre-drying, while an improved flour with an amount of damaged starch of less than 8 wt% and a water content of 2-12 wt% is collected.

6. Process according to Claim 5, wherein the remilling is repeated at least once.

7. Process according to Claims 5 and 6, wherein the temperature during remilling is 10-95°C.

8. Process according to Claim 7, wherein the temperature during remilling is achieved by heating the flour prior to remilling.

9. Process according to Claim 5, wherein the remilling is carried out with an air flow of 0.6-5.0 $Nm^3$/min. at 5-15 bar pressure and at a temperature of 20-80°C.

10. Process according to Claim 5, wherein, prior to remilling, the flour is dried at 35-80°C for 5 minutes -50 hours.

11. Process according to Claim 5, wherein a pre-dried flour having a water content of 5-10 wt.% is remilled.

12. Process according to Claim 10, wherein the pre-drying is carried out as a fluidized bed process.

13. Bakery products including at least partly the flour of Claims 1-4, or the flour obtainable according to the processes of Claims 5-12.

14. Doughs containing at least partly the flour of Claims 1-4, or the flour obtainable according to Claims 5-12.

15. Use of a flour in a dough to improve the baking performance of the dough, wherein the improved flour of Claims 1-4 is used to increase the patty height of products obtained after baking doughs containing the improved flour.

## Patentansprüche

1. Verbessertes Mehl einer geringen Teilchengröße für Backzwecke, in welchem die durchschnittliche Teilchengröße weniger als 45 μm, die Menge an geschädigter Stärke weniger als 8 Gew.-% und der Wassergehalt des Mehles 2 bis 12 Gew.-% betragen und das durch erneutes Mahlen eines fakultativ vorgetrockneten Mehles mit einem Wassergehalt von mehr als 12,5 Gew.-% in einer Luftstrahlmühle erhältlich ist.

2. Verbessertes Mehl nach Anspruch 1, in welchem der Wassergehalt des Mehles 3,0 bis 8,0 Gew.-% beträgt und die durchschnittliche Teilchengröße kleiner als 25 μm ist.

3. Verbessertes Mehl nach Anspruch 1, in welchem das Mehl nach Messen an einer wäßrigen Suspension des Mehles eine Sauerstoffaufnahme von 0,01 bis 3,0 μg $O_2$/g Mehl/10 min hat.

4. Verbessertes Mehl nach Anspruch 3, in welchem das Mehl eine Sauerstoffaufnahme von 0,5 bis 2,5 μg $O_2$/g Mehl/10 min hat.

5. Verfahren zum Verbessern des Backverhaltens eines Mehles, wonach das Mehl mit einem Wassergehalt von mehr als 12,5 Gew.-%, fakultativ nach Vortrocknen, in einer Luftstrahlmühle erneut gemahlen wird, wobei ein verbessertes Mehl mit einem Gehalt an geschädigter Stärke von weniger als 8 Gew.-% und einem Wassergehalt von 2 bis 12 Gew.-% erhalten wird.

6. Verfahren nach Anspruch 5, wonach das erneute Mahlen mindestens einmal wiederholt wird.

7. Verfahren nach Anspruch 5 und 6, wonach die Temperatur während des erneuten Mahlens 10 bis 95°C beträgt.

8. Verfahren nach Anspruch 7, wonach die Temperatur während des erneuten Mahlens durch Erhitzen des Mehles vor der erneuten Mahlen erreicht wird.

9. Verfahren nach Anspruch 5, wonach das erneute Mahlen mit einem Luftfluß von 0,6 bis 5,0 $Nm^3$/min bei einem Druck von 5 bis 15 bar und bei einer Temperatur von 20 bis 80°C erfolgt.

**10.** Verfahren nach Anspruch 5, wonach das Mehl vor dem erneuten Mahlen 5 min bis 50 h bei 35 bis 80°C getrocknet wird.

**11.** Verfahren nach Anspruch 5, wonach ein vorgetrocknetes Mehl eines Wassergehaltes von 5 bis 10 Gew.-% erneut gemahlen wird.

**12.** Verfahren nach Anspruch 10, wonach das Vortrocknen als Wirbelbettverfahren erfolgt.

**13.** Bäckereiprodukte, die das Mehl der Ansprüche 1 bis 4 oder das nach den Verfahren der Beispiele 5 bis 12 erhältliche Mehl mindestens teilweise anfassen.

**14.** Teige, die das Mehl der Ansprüche 1 bis 4 oder das nach den Ansprüchen 5 bis 12 erhältliche Mehl mindestens teilweise umfassen.

**15.** Verwendung eines Mehles in einem Teig zum Verbessern des Backverhaltens des Teiges, wonach das verbesserte Mehl der Ansprüche 1 bis 4 verwendet wird, um die Pastetchenhöhe der Produkte zu erhöhen, die nach dem Backen der das verbesserte Mehl enthaltenden Teige erhalten werden.

## Revendications

**1.** Farine améliorée ayant une faible taille de particule pour la cuisson, dans laquelle la farine a une taille moyenne de particule inférieure à 45 $\mu$m, une quantité d'amidon endommagé inférieure à 8 % en poids, et une teneur en eau de la farine de 2-12 % en poids, cette farine pouvant être obtenue par rebroyage d'une farine avec une teneur en humidité supérieure à 12,5 % en poids, qu'on peut éventuellement sécher dans un broyeur à jet d'air.

**2.** Farine améliorée selon la revendication 1, dans laquelle la teneur en eau de la farine est 3,0 à 8,0 % en poids et la taille moyenne de particule est inférieure à 25 $\mu$m.

**3.** Farine améliorée selon la revendication 1, dans laquelle la farine a une absorption d'oxygène de 0,01 - 3,0 $\mu$g $O_2$/g farine/10 min. quand on la mesure sur une suspension aqueuse.

**4.** Farine améliorée selon la revendication 3 dans laquelle la farine a une absorption d'oxygène de 0,5 - 2,5 $\mu$g $O_2$/ g farine/10 min.

**5.** Procédé d'amélioration des performances à la cuisson d'une farine, dans lequel on rebroie dans un broyeur à jet d'air la farine ayant une teneur en eau supérieure à 12,5 %, éventuellement après pré-séchage, ce qui donne une farine améliorée ayant une teneur en amidon endommagé inférieure à 8 % en poids et une teneur en eau de 2 - 12 % en poids.

**6.** Procédé selon la revendication 5, dans lequel on répète le rebroyage au moins une fois de plus.

**7.** Procédé selon les revendications 5 et 6, dans lequel la température pendant le rebroyage est comprise entre 10 et 95°C.

**8.** Procédé selon la revendication 7, dans lequel la température pendant le rebroyage est obtenue par chauffage de la farine avant le rebroyage.

**9.** Procédé selon la revendication 5, dans lequel le rebroyage est réalisé avec un débit d'air de 0,6 - 5,0 nm$^3$/min à une pression de 5-15 bar et à une température de 20-80°C.

**10.** Procédé selon la revendication 5, dans lequel on sèche la farine, avant le rebroyage, entre 35 et 80°C pendant 5 minutes-50 heures.

**11.** Procédé selon la revendication 5, dans lequel on rebroie une farine pré-séchée ayant une teneur en eau de 5-10 % en poids.

**12.** Procédé selon la revendication 10, dans lequel on réalise le pré-séchage dans un procédé de lit fluidisé.

13. Produits de panification comprenant au moins en partie la farine des revendications 1-4 ou la farine obtenue selon les procédés des revendications 5-12.

14. Pâtes contenant au moins en partie la farine des revendications 1-4 ou la farine qu'on peut obtenir selon les revendications 5-12.

15. Utilisation d'une farine dans une pâte pour améliorer les performances de cuisson de la pâte, dans laquelle on utilise la farine améliorée des revendications 1-4 pour augmenter la hauteur de croûte des produits obtenus après cuisson des pâtes contenant la farine améliorée.